# EUROPÄISCHE PATENTSCHRIFT

(11) **EP 1 916 451 B1**
(45) Veröffentlichungstag und Bekanntmachung des Hinweises auf die Patenterteilung: **02.03.2011**
(21) Anmeldenummer: 07020892.1
(22) Anmeldetag: 25.10.2007
(51) Int. Cl.: F16H 61/02

(54) **Gangauswahlverfahren und -vorrichtung**
Gearbox control method and gearbox
Procédé et dispositif de sélection de vitesses

(30) Priorität: 26.10.2006 DE 102006050518
(43) Veröffentlichungstag der Anmeldung: 30.04.2008
(73) Patentinhaber: GM Global Technology Operations, Inc., Detroit, MI 48265-3000 (US)
(72) Erfinder: Becker, Gernot, 55278 Dexheim (DE); Gentile, Martin, 65428 Rüsselsheim - Königstadten (DE); Hendrischke, Falko, 65835 Liederbach am Taunus (DE)
(74) Vertreter: Daniel, Ulrich W.P.

(56) Entgegenhaltungen:
- EP-A- 0 273 735
- WO-A-03/076834
- DE-A1- 3 436 008
- DE-A1- 10 302 503
- US-A- 4 848 529
- US-A- 4 889 015
- US-A- 5 067 373
- US-A- 6 032 096

## Beschreibung

Die vorliegende Erfindung betrifft ein Verfahren zum Steuern der Gangauswahl in einem Kraftfahrzeug mit Automatikgetriebe.

Aus US-A 5 067 373 ist eine automatische Getriebesteuerung bekannt, die bei einem Gangwechsel über zwei Stufen einen zeitweilig einen Zwischengang einlegt.

Moderne, insbesondere elektronisch gesteuerte Automatikgetriebe verwenden häufig eine Mehrzahl von Schaltcharakteristiken, die einen einzulegenden Gang in Abhängigkeit von einem Arbeitspunkt des Kraftfahrzeuges spezifizieren, um anhand dieser Schaltcharakteristiken den dem aktuellen Arbeitspunkt angemessenen Gang einzustellen. Aus US 6 032 096 A ist eine Steuerung bekannt, die einen Fahrzustand des Fahrzeugs überwacht, anhand vorgegebener Regeln aus diesem Fahrzustand eine vermutliche Einsatzsituation des Fahrzeuges wie etwa Stadtverkehr, Autobahnverkehr, Bergfahrt etc. ableitet und unter mehreren verfügbaren Schaltcharakteristiken jeweils diejenige für die Gangauswahl heranzieht, die der angenommenen Einsatzsituation angemessen ist. Eine solche Steuerung kann sich zwar unterschiedlichen Verkehrssituationen wie Stadtverkehr, Autobahnfahrt, kurvenreiche Strecke etc. anpassen, nicht aber persönlichen Vorlieben des Fahrers.

Aufgabe der vorliegenden Erfindung ist, ein Verfahren zum Steuern der Gangauswahl anzugeben, das eine selbsttätige Anpassung an einen mehr oder weniger sportlichen Fahrstil des Fahrers ermöglicht.

Die Aufgabe wird gelöst durch ein Verfahren mit den Merkmalen des Anspruchs 1.

Wenn die Umschaltung über mehr als zwei Gangstufen geht, wird zweckmäßigerweise im Laufe der Umschaltung der Reihe nach jeder Gang des Automatikgetriebes, dessen Stufe zwischen denen von Ausgangs- und Ziel-Gang liegt, als Zwischengang eingelegt.

Um den Umschaltvorgang zu vergleichmäßigen, bleibt der Zwischengang zweckmäßigerweise während einer vorgegebenen Zeitspanne eingelegt. Zum Steuern dieser Zeitspanne kann die Steuervorrichtung mit einem Zeitgeber versehen sein.

Um die automatische Einstellung des ersten oder des zweiten Ausgangs-Betriebsmodus vorzunehmen, werden zweckmäßigerweise Aktionen des Fahrers, die als Indiz für einen sportlichen Fahrstil des Fahrers ansehbar sind, gezählt, und der erste Ausgangs-Betriebsmodus wird eingestellt, wenn der Zählwert einen Grenzwert übersteigt. Derartige Aktionen können zum Beispiel Fahrpedalbetätigungen sein, deren Geschwindigkeit und/oder Amplitude eine vorgegebene Schwelle überschreiten, Wechsel zwischen Fahrpedal- und Bremspedalbetätigung innerhalb einer vorgegebenen Zeitspanne, oder dergl.

Im automatisch geschwindigkeitsgeregelten Ziel-Betriebsmodus besteht in der Regel für den Fahrer keine Veranlassung zu auf eine sportliche Fahrweise hinweisenden Aktionen, während das Fahrzeug sich in dem Ziel-Betriebsmodus befindet. Es kann daher zweckmäßigerweise vorgesehen werden, dass der Zählwert unverändert bleibt, so lange das Automatikgetriebe in dem Zielmodus ist, so dass, wenn dieser wieder verlassen wird, die vorherige Beurteilung des Fahrstils des Fahrers wieder Gültigkeit erlangt.

Alternativ ist aber auch die Annahme gerechtfertigt, dass eine Veranlassung für einen sportlichen Fahrstil, die vor dem Übergang in den automatisch geschwindigkeitsgeregelten Zielmodus bestanden haben mag, mit dem Übergang in diesen Modus weggefallen ist, da anderenfalls der automatisch geschwindigkeitsgeregelte Zielmodus wahrscheinlich nicht gewählt worden wäre. Daher kann es auch sinnvoll sein, den Zähler zurückzusetzen, wenn das Automatikgetriebe in dem Zielmodus ist, so dass nach Verlassen des automatisch geschwindigkeitsgeregelten Zielmodus der sportliche erste Ausgangs-Betriebsmodus nicht unmittelbar wieder hergestellt wird, sondern erst dann, wenn der Zähler wieder den hierfür erforderlichen Zählwert erreicht hat.

Dabei kann es zweckmäßig sein, die Rücksetzung des Zählers erst vorzunehmen, wenn das Automatikgetriebe eine vorgegebene Zeit lang in dem Zielmodus gewesen ist; so bleibt ein kurzfristiger, eventuell vom Fahrer nicht beabsichtigter oder auf eine falsche Beurteilung der Verkehrssituation zurückgehender Übergang in den Zielmodus folgenlos.

Eine Zwischenlösung zwischen der unveränderten Beibehaltung und der vollständigen Rücksetzung des Zählwertes kann auch darin liegen, dass der Zählwert allmählich reduziert wird, wenn das Automatikgetriebe in dem Zielmodus ist.

Weitere Merkmale und Vorteile der Erfindung ergeben sich aus der nachfolgenden Beschreibung von Ausführungsbeispielen unter Bezugnahme auf die beigefügte Zeichnung.

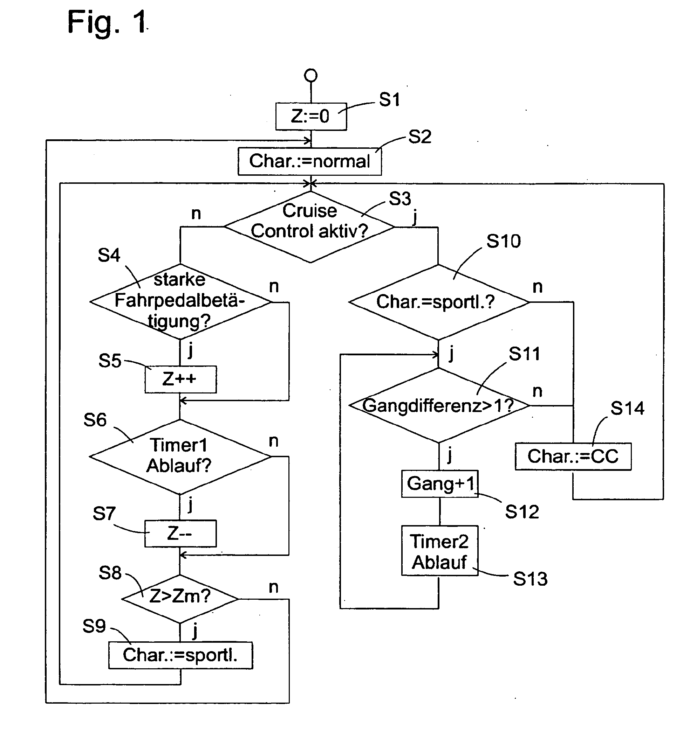

Fig. 1, die einzige Fig., zeigt ein Flussdiagramm eines erfindungsgemäßen Verfahrens.

Die zur Durchführung des erfindungsgemäßen Verfahrens verwendete Vorrichtung ist nicht in einer Figur dargestellt, da ihre Realisierung aus auf dem Merkt verfügbaren Komponenten dem Fachmann in Kenntnis des im Folgenden beschriebenen, von der Vorrichtung ausgeführten Verfahrens keine Schwierigkeiten bereitet. Ein Mikrocontrollersystem als Kern der Vorrichtung sowie durch dieses Mikrocontrollersystem gesteuerte Aktoren zum Durchführen eines Schaltvorganges in einem Automatikgetriebe oder einem automatisierten Schaltgetriebe sind dem Fachmann vertraut.

In einem Speicher des Mikrocontrollersystems sind drei Schaltcharakteristiken hinterlegt, die jeweils für einen gegebenen Arbeitspunkt des Motors, der zum Beispiel durch die aktuelle Fahrzeuggeschwindigkeit und Motorlast charakterisiert ist, einen in dem Automatikgetriebe einzulegenden Gang angibt. Eine dieser Schaltcharakteristiken, als normale Charakteristik bezeichnet, wird von der Steuervorrichtung jedes Mal beim Einschalten des Motors zugrunde gelegt. Um einen niedrigen Kraftstoffverbrauch zu realisieren, sieht die normale Schaltcharakteristik relativ niedrige Geschwindigkeiten für ein Umschalten in den jeweils nächsthöheren Gang vor. Eine zweite Schaltcharakteristik, als Cruise-Control- oder CC-Charakteristik bezeichnet, sieht ähnliche Umschaltgeschwindigkeiten wie die normale Schaltcharakteristik vor; beide Charakteristiken können identisch sein. Eine dritte Schaltcharakteristik, als sportliche Charakteristik bezeichnet, sieht zum Umschalten in den nächsthöheren Gang jeweils höhere Geschwindigkeiten als die normale Charakteristik vor.

Das in dem Flussdiagramm der Fig. 1 dargestellte Verfahren setzt mit dem Anlassen des Fahrzeuges ein. In Schritt S1 wird ein Zähler Z auf 0 initialisiert. Im nächsten Schritt S2 wird die normale Schaltcharakteristik gesetzt. Es folgt in Schritt S3 eine Überprüfung, ob durch den Fahrer der Cruise-Control-Modus gewählt ist, in welchem durch eine an sich bekannte und hier nicht dargestellte Automatik die Geschwindigkeit des Fahrzeuges im Wesentlichen konstant gehalten wird. Wenn dieser Modus nicht aktiv ist, die Geschwindigkeit des Fahrzeuges also der Steuerung durch den Fahrer unterliegt, überwacht der Mikrocontroller in Schritt S4 die Fahrpedalbetätigung durch den Fahrer und entscheidet anhand vorgegebener Kriterien wie etwa Geschwindigkeit der Betätigung, der Auslenkung des Fahrpedals oder dergl., ob die Betätigung als eine starke, auf eine sportliche Fahrweise hinweisende Betätigung anzusehen ist oder nicht. Wenn ja, wird in Schritt S5 der Zähler Z inkrementiert, wobei die Inkrementierung in festen Schritten oder auch in je nach Stärke der Fahrpedalbetätigung variablen Schritten erfolgen kann. Wenn keine starke Fahrpedalbetätigung erkannt wird, bleibt der Zähler Z unverändert.

In Schritt S6 wird überprüft, ob ein periodisch arbeitender Zeitgeber Timer1 abgelaufen ist oder nicht. Dieser Zeitgeber kann eine von dem Mikrocontroller unabhängige Schaltung sein, die z.B. durch ein Interrupt die Arbeit des Mikrocontrollers beeinflusst, oder er kann durch ein von dem Mikrocontroller selbst ausgeführtes Unterprogramm implementiert sein. Wenn der Zeitgeber Timer 1 nicht abgelaufen ist, bleibt der Zähler Z unverändert; anderenfalls wird er in Schritt S7 dekrementiert. Die Dekrementierung kann die Subtraktion eines festen Wertes von dem Zählwert Z sein; vorzugsweise wird ein zum aktuellen Zählwert Z proportionaler Wert subtrahiert, um zu verhindern, dass der Zählwert Z im Laufe des Betriebs des Fahrzeuges divergiert.

In Schritt S8 wird der Zählwert Z mit einer Schwelle Zm verglichen, und wenn festgestellt wird, dass die Schwelle Zm nicht überschritten ist, kehrt das Verfahren zu Schritt S2 zurück. Wenn die Schwelle Zm überschritten ist, wird der Fahrstil des Fahrers als sportlich eingestuft und die dementsprechende sportliche Schaltcharakteristik wird in Schritt S9 ausgewählt, um anhand von dieser in Zukunft Entscheidungen über Schaltvorgänge zu treffen. Im Anschluss daran kehrt das Verfahren zu Schritt S3 zurück.

In der vorliegenden Beschreibung wird der Einfachheit halber davon ausgegangen, dass nur zwei Schaltcharakteristiken für Fahrbetrieb mit durch den Fahrer gesteuerter Geschwindigkeit zur Verfügung stehen. Es liegt jedoch auf der Hand, dass für den Zählwert Z mehrere Schwellen definiert sein können und in Abhängigkeit vom Zählwert Z die Auswahl zwischen mehr als zwei Schaltcharakteristiken getroffen werden kann, oder dass weitere Zähler implementiert werden können, um die Häufigkeit bestimmter Ereignisse wie z.B. von sich schnell abwechselnden Beschleunigungs- und Bremsvorgängen während des Fahrbetriebs zu beurteilen, und die Auswahl zwischen einer Mehrzahl von Schaltcharakteristiken unter Berücksichtigung dieser mehreren Zähler erfolgen kann.

So lange der Fahrer nicht den Cruise-Control-Modus einstellt, wiederholen sich die Schritte S2 bis S8 oder S3 bis S9 in einer Endlosschleife. Wenn festgestellt wird, dass der Fahrer den Cruise-Control-Modus gewählt hat, geht das Verfahren von Schritt S3 nach Schritt S10 über. Hier wird geprüft, ob die gegenwärtig ausgewählte Schaltcharakteristik die sportliche oder die normale ist. Die im Falle der automatischen Geschwindigkeitsregelung im Cruise-Control-Modus zu verwendende CC-Schaltcharakteristik unterscheidet sich wenig von der normalen Schaltcharakteristik; insbesondere gibt es keine Arbeitspunkte, bei denen sich die in den zwei Schaltcharakteristiken vorgeschriebenen Gänge um mehr als eine Stufe unterscheiden. Daher geht das Verfahren direkt zu Schritt S14 über, in welchem auf die CC-Schaltcharakteristik umgeschaltet wird.

Wenn in Schritt S10 die sportliche Schaltcharakteristik aktiv ist, wird in Schritt S11 zunächst der aktuelle Gang des Fahrzeuges mit dem für den aktuellen Arbeitspunkt gemäß der CC-Schaltcharakteristik vorgeschriebenen Gang verglichen. Wenn aktueller und vorgeschriebener Gang sich um nicht mehr als eine Stufe unterscheiden, geht das Verfahren ebenfalls zu Schritt S14 über, was, wenn aktueller und vorgeschriebener Gang nicht identisch sind, einen Schaltvorgang um eine Stufe auslösen kann. Wenn hingegen die Differenz zwei Stufen oder mehr beträgt, wird zunächst in Schritt S12 der Gang um eine Stufe heraufgeschaltet, Kraftschluss zwischen Motor und Fahrwerk wird hergestellt, und ein Zeitgeber Timer2 wird in Gang gesetzt, nach dessen Ablauf in Schritt S13 das Verfahren zu Schritt S11 zurückkehrt. So ist ein stufenweiser Übergang zu dem gemäß CC-Charakteristik vorgeschriebenen Gang sichergestellt, der sich über eine Zeitspanne von mehreren Sekunden verteilen kann. So wird eine allmähliche Anpassung der Motordrehzahl erreicht, und unnötig abrupte Schaltvorgänge sowie Schaltpendeln werden vermieden.

Bei der oben beschriebenen Ausgestaltung des erfindungsgemäßen Verfahrens ändert sich der Zählwert Z nicht, solange der Cruise-Control-Modus aktiv ist. Nach Verlassen des Cruise-Control-Modus wird daher dieselbe Schaltcharakteristik wieder eingestellt, die auch vor dem Übergang in den Cruise-Control-Modus aktiv war.

Der Zählwert Z kann aber auch im Schritt S14 zurück auf 0 gesetzt werden; dies hat zur Folge, dass der Mikrocontroller auf die normale Schaltcharakteristik übergeht, sobald nach Aufhebung des Cruise-Control-Modus durch den Fahrer Schritt S8 zum ersten Mal wiederholt wird.

Eine weitere Möglichkeit ist, bei Übergang in den Cruise-Control-Modus einen anderen Zeitgeber in Gang zu setzen und den Zählwert Z erst zurückzusetzen, wenn nach Ablauf dieses Zeitgebers der Cruise-Control-Modus immer noch aktiv ist. So bleibt ein kurzzeitiger, eventuell unbeabsichtigter Übergang in den Cruise-Control-Modus ohne Auswirkung auf den Zählwert Z und die verwendete Schaltcharakteristik.

Alternativ können die Schritte S6, S7 auch im Cruise-Control-Modus regelmäßig wiederholt werden, was zur Folge hat, dass der Zählwert Z im Laufe der Zeit gegen 0 geht. Die Folge ist, dass wenn der Cruise-Control-Modus nur kurze Zeit aktiv war, in der Regel die zuvor aktive Schaltcharakteristik wieder eingestellt wird. Je länger das Fahrzeug im Cruise-Control-Modus war, umso wahrscheinlicher wird nach dem Cruise-Control-Modus die normale Schaltcharakteristik gewählt.

## Patentansprüche

1. Verfahren zum Steuern der Gangauswahl in einem Kraftfahrzeug mit Automatikgetriebe, das zwischen wenigstens zwei Ausgangs-Betriebsmodi, in denen die Geschwindigkeit des Kraftfahrzeugs durch den Fahrer steuerbar ist, und einem Ziel-Betriebsmodus umschaltbar ist, wobei jedem Betriebsmodus eine Schaltcharakteristik zugeordnet ist, die jeweils einen einzulegenden Gang des Automatikgetriebes in Abhängigkeit von einem Arbeitspunkt des Kraftfahrzeugs spezifiziert und der erste Ausgangs-Betriebsmodus ein sportlicheres Fahrverhalten unterstützt als der zweite Ausgangs-Betriebsmodus, **dadurch gekennzeichnet, dass** in dem Ziel-Betriebsmodus die Geschwindigkeit des Kraftfahrzeugs durch einen Automaten geregelt ist, dass in den Ausgangs-Betriebsmodi Aktionen des Fahrers, die als Indiz für einen sportlichen Fahrstil des Fahrers ansehbar sind, gezählt werden (S5) und der erste Ausgangs-Betriebsmodus eingestellt wird (S9), wenn der Zählwert (Z) einen Grenzwert (Zm) übersteigt (S8), und dass wenn die Umschaltung in den Ziel-Betriebsmodus an einem Arbeitspunkt stattfindet, an dem ein durch die Schaltcharakteristik des Ziel-Betriebsmodus spezifizierter Ziel-Gang um wenigstens zwei Stufen höher ist als ein durch die Schaltcharakteristik des Ausgangs-Betriebsmodus spezifizierter Ausgangs-Gang (S11), zwischen Ausgangs- und Ziel-Gang wenigstens ein Zwischengang eingelegt wird (S12), dessen Stufe zwischen denen von Ausgangs- und Ziel-Gang liegt.

2. Verfahren nach Anspruch 1, **dadurch gekennzeichnet, dass** im Laufe der Umschaltung der Reihe nach jeder Gang des Automatikgetriebes, dessen Stufe zwischen denen von Ausgangs- und Ziel-Gang liegt, als Zwischengang eingelegt wird (S12).

3. Verfahren nach Anspruch 1 oder 2, **dadurch gekennzeichnet, dass** der Zwischengang während einer vorgegebenen Zeitspanne eingelegt bleibt.

4. Verfahren nach einem der vorhergehenden Ansprüche, **dadurch gekennzeichnet, dass** der Zählwert (Z) unverändert bleibt, solange das Automatikgetriebe in dem Ziel-Betriebsmodus ist.

5. Verfahren nach einem der vorhergehenden Ansprüche, **dadurch gekennzeichnet, dass** der Zählwert (Z) zurückgesetzt wird, wenn das Automatikgetriebe in dem Ziel-Betriebsmodus ist.

6. Verfahren nach Anspruch 5, **dadurch gekennzeichnet, dass** die Rücksetzung des Zählwertes (Z) stattfindet, wenn das Automatikgetriebe eine vorgegebene Zeit lang in dem Ziel-Betriebsmodus gewesen ist.

7. Verfahren nach einem der vorhergehenden Ansprüche, **dadurch gekennzeichnet, dass** der Zählwert (Z) allmählich reduziert wird, wenn das Automatikgetriebe in dem Ziel-Betriebsmodus ist.

## Claims

1. A method for controlling the gear selection in a motor vehicle with automatic transmission which can be switched over between at least two output operating modes, in which the speed of the motor vehicle can be controlled by the driver, and a target operating mode, with each operating mode being associated with shifting characteristics which specify a respective gear of the automatic transmission to be engaged depending on an operating point of the motor vehicle, and the first output operating mode supports a sportier driving behaviour than the second output operating mode, **characterized in that** in the target operating mode the speed of the motor vehicle is controlled by an automatic unit, actions of the driver which can be regarded as an indicator for a sporty driving behaviour of the driver are counted (S5) in the output operating modes, and the first output operating mode is set (S9) when the counted value (Z) exceeds a limit value (Zm) (S8), and that if the changeover into the target operating mode occurs at a working point in which a target gear which is specified by the shifting characteristics of the target operating mode is higher by at least two stages than an output gear specified by the shifting characteristics of the output operating mode (S11), at least one intermediate gear is engaged between output and target gear (S12) whose stage lies between those of output and target gear.

2. A method according to claim 1, **characterized in that** in the course of the changeover each gear of the automatic transmission whose stage lies between those of the output and target gear is engaged as an intermediate gear (S12).

3. A method according to claim 1 or 2, **characterized in that** the intermediate gear remains engaged during a predetermined period of time.

4. A method according to one of the preceding claims, **characterized in that** the counted value (Z) remains unchanged as long as the automatic transmission is in the target operating mode.

5. A method according to one of the preceding claims, **characterized in that** the counted value (Z) is reset when the automatic transmission is in the target operating mode.

6. A method according to claim 5, **characterized in that** the resetting of the counted value (Z) occurs when the automatic transmission has been in the target operating mode for a predetermined period of time.

7. A method according to one of the preceding claims, **characterized in that** the counted value (Z) is reduced gradually when the automatic transmission is in the target operating mode.

## Revendications

1. Procédé pour la commande de la sélection de la vitesse dans un véhicule à moteur à boîte de vitesses automatique, qui peut être commuté entre au moins deux modes de fonctionnement initiaux dans lesquels la vitesse du véhicule à moteur peut être contrôlée par le conducteur et un mode de fonctionnement visé, dans lequel chaque mode de fonctionnement est associé à une caractéristique de changement de rapport qui spécifie une vitesse de la boîte automatique à passer en fonction d'un point de fonctionnement du véhicule à moteur et le premier mode de fonctionnement initial permet un comportement de conduite plus sportif que le deuxième mode de fonctionnement initial, **caractérisé en ce que** dans le mode de fonctionnement visé, la vitesse du véhicule à moteur est régulée par un automatisme, **en ce que** dans les modes de fonctionnement initiaux les actions du conducteur pouvant être considérées comme un indice d'un style de conduite sportif de celui-ci sont comptées (S5) et le premier mode de fonctionnement initial est réglé (S9) si la valeur de comptage (Z) dépasse (S8) une limite (Zm), et **en ce que** lorsque la commutation dans le mode de fonctionnement visé se produit à un point de fonctionnement auquel une vitesse visée spécifiée par la caractéristique de changement de rapport du mode de fonctionnement visé est plus haute d'au moins deux rapports qu'une vitesse initiale (S11) spécifiée par la caractéristique de changement de rapport du mode de fonctionnement initial, au moins un rapport intermédiaire se situant entre les vitesses initiale et visée est passé (S12).

2. Procédé selon la revendication 1, **caractérisé en ce qu'**au cours du changement de vitesse, chaque rapport de la boîte automatique se situant entre la vitesse initiale et la vitesse visée est successivement passé comme rapport intermédiaire (S12).

3. Procédé selon la revendication 1 ou 2, **caractérisé en ce que** le rapport intermédiaire reste passé pendant un intervalle de temps prédéterminé.

4. Procédé selon l'une des revendications précédentes, **caractérisé en ce que** la valeur de comptage (Z) reste inchangée tant que la boîte automatique est dans le mode de fonctionnement visé.

5. Procédé selon l'une des revendications précédentes, **caractérisé en ce que** la valeur de comptage (Z) est réinitialisée quand la boîte automatique est dans le mode de fonctionnement visé.

6. Procédé selon la revendication 5, **caractérisé en ce que** la valeur de comptage (Z) est réinitialisée quand la boîte automatique est restée pendant une durée prédéterminée dans le mode de fonctionnement visé.

7. Procédé selon l'une des revendications précédentes, **caractérisé en ce que** la valeur de comptage (Z) est réduite progressivement quand la boîte automatique est dans le mode de fonctionnement visé.
